# EUROPEAN PATENT APPLICATION

(11) **EP 4 834 653 A1**
(43) Date of publication of application: **04.11.2026**
(21) Application number: 26170235.1
(22) Date of filing: 01.04.2026
(51) Int. Cl.: B60L 58/21, B60L 15/02, B60L 50/51, B60L 58/12, H02J 7/00

(54) **DIRECT CURRENT CONTROL FOR SMARTCELL**

(30) Priority: 28.04.2025 US 202519192031
(71) Applicant: Volvo Car Corporation, 405 31 Göteborg (SE)
(72) Inventor: SINGH, Aditya, 405 31 GÖTEBORG (SE); FORSSELL, Jonas, 405 31 GÖTEBORG (SE); JI, Qinglei, 405 31 GÖTEBORG (SE)
(74) Representative: Kransell & Wennborg KB

(57) **Abstract**

Systems for direct current control of SmartCells are provided. A system onboard a vehicle can comprise: a plurality of battery cell clusters, each cluster comprising one or more battery cells and an associated cluster board; a master board configured to communicate with the plurality of cluster boards and provide control signals based on real-time power demands, including synchronization values; a memory that stores computer-executable components; and a processor that executes the computer-executable components stored in memory, wherein the computer-executable components comprise a direct current control component. The direct current control component can transmit current amplitude requests, angle information, or priority orders from the master board to the cluster boards, and can synchronize the operation of the cluster boards by calculating a system reference angle based on rotor angle, phase difference, and integrated rotor velocity, thereby enabling the battery cell clusters to collectively produce a controlled AC voltage.

## Description

### TECHNICAL FIELD

The disclosed subject matter relates to vehicles (e.g., transportation vehicles), and more particularly, to electric machine and charging controls of electric vehicles.

### BACKGROUND

Electric vehicles (EVs) rely heavily on efficient and reliable power delivery systems to meet performance demands during both driving and charging. In conventional systems, inverters play a critical role in converting DC power from battery cells into AC power suitable for driving the vehicle's electric motor or for interfacing with external power grids during charging. Traditional inverter systems typically utilize high-frequency pulse-width modulation (PWM) to manage power fluctuations and mitigate fast transients or harmonics that occur during driving or charging.

Despite their effectiveness in stabilizing power delivery, conventional inverters present several inherent drawbacks. These systems tend to occupy significant space within the vehicle due to the complex circuitry and supporting components required for high-frequency switching. This increased hardware footprint not only adds to the system's overall weight but also escalates manufacturing costs. Moreover, conventional inverters generate substantial heat during operation, necessitating additional cooling systems that further increase the vehicle's complexity and cost. These inefficiencies ultimately reduce the overall energy efficiency of the power system, impacting the vehicle's range and performance. The reliance on high-frequency PWM control in inverter systems also introduces challenges in maintaining optimal efficiency. To effectively respond to dynamic power demands, such systems require precise and rapid adjustments to switching patterns. Achieving this control demands sophisticated electronics, which can contribute to higher power losses and further reduce system efficiency. As a result, vehicle manufacturers face the challenge of balancing power stability, thermal management, and space constraints when implementing traditional inverter solutions.

Additionally, achieving a stable and synchronized AC output across multiple battery clusters presents further complications. Systems utilizing multiple control boards to manage distributed clusters of battery cells can face data synchronization challenges. In such configurations, ensuring consistent voltage output across multiple boards may require rapid data communication and high processing speeds, which can place significant computational demands on centralized controllers. This can limit the system's responsiveness and introduce performance bottlenecks.

In conventional systems, another limitation arises in the delivery of stable DC supply. Traditional battery architectures often require several high-performance DCDC converters to maintain a consistent and reliable DC output for various vehicle subsystems. These converters can be expensive, space-consuming, and add complexity and thermal load to the system. In contrast, the SmartCell architecture can enhance DC supply availability by leveraging multicluster channels, where distributed battery clusters can independently contribute to the DC bus. This decentralized approach can reduce dependence on centralized DCDC converters, lower system cost, and improve efficiency and redundancy in DC power delivery. The above-described background is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, structures, and/or apparatuses can facilitate direct current control of SmartCells in electric vehicles.

Electric vehicles are rapidly gaining traction as a cleaner and more sustainable alternative to internal combustion engine vehicles. A typical electric driveline includes a battery system operating at a direct current (DC) voltage level. Existing battery systems power the vehicle's electric motor and support other subsystems. However, to interface with electric motors - which require alternating current (AC) for operation - and with the power grid for charging, conventional EVs rely on complex auxiliary systems, particularly DC-to-AC inverters. These systems are often expensive, require substantial packaging space, demand advanced cooling mechanisms, and introduce additional points of failure, making the overall driveline architecture more complicated and less efficient.

Furthermore, existing battery systems face intrinsic limitations. The control of battery arrangements in EVs must meet stringent requirements, including support for frequent and efficient charging cycles, high electrical power output, temperature resilience, and durability over extended lifespans. Conventional systems, which often involve centralized control and bulk inverters, are not well-optimized for the growing performance and efficiency demands placed on modern EVs. Additionally, system architectures dependent on high-frequency pulse-width modulation (PWM) require significant power and thermal overhead, further reducing the overall system efficiency. Thermal management remains a critical issue in battery systems. Lithium-ion battery cells, commonly used in commercial EVs, are highly sensitive to operating temperatures. At low temperatures (e.g., below 0° C), the chemical processes within the cells slow down, leading to increased internal resistance, reduced charge and discharge capacities, and in extreme cases, irreversible cell damage. Conversely, high temperatures (e.g., above 60° C) can accelerate degradation by reducing the availability of active materials, increasing internal resistance, and triggering thermal runaway events. These challenges necessitate the development of systems that can manage energy efficiently and distribute power to minimize thermal stress and improve the reliability of individual battery cells.

As alluded to above, improved techniques for direct current control of SmartCells in electric vehicles are desirable, and various embodiments are described herein to this end and/or other ends.

According to an embodiment, a system can comprise a plurality of battery cell clusters (e.g., SmartCells), each cluster comprising one or more battery cells and an associated cluster board, wherein each cluster board includes integrated monitoring and switching elements; a master board, configured to communicate with the plurality of cluster boards and provide control signals based on real-time power demands, that sends synchronization values to each cluster board; a memory that stores computer executable components; and a processor that executes the computer executable components stored in memory. The computer executable components can comprise a direct current control component that transmits current amplitude requests, angle information, or priority orders from the master board to the cluster boards, and synchronizes the operation of the plurality of cluster boards by calculating a system reference angle based on the rotor angle, phase difference, and integrated rotor velocity to align the output of the battery cell clusters and produce a controlled AC voltage.

According to another embodiment, a method for controlling power delivery in a battery system onboard a vehicle can comprise receiving speed, torque, and DC voltage inputs; determining required direct-axis and quadrature-axis currents; calculating a current amplitude and angle based on the currents, and transmitting the calculated values along with corresponding rotor or grid angle and rotor or grid velocity data to a plurality of cluster boards; receiving, at a cluster board, the transmitted current amplitude, corresponding rotor or grid angle and rotor or grid velocity data; estimating an updated angle based on information received from the master board, the information comprising a rotor or grid angle, a rotor or grid velocity, and a phase difference associated with a phase sequence of the cluster board; generating a reference current; and comparing the reference current with a measured current at the cluster board and processing the error to generate a reference voltage output for pulse width modulation switching.

According to yet another embodiment, a non-transitory machine-readable storage medium can comprise executable instructions that, when executed by a processor onboard a vehicle, can facilitate performance of operations. The operations can further comprise: receiving speed, torque, and DC voltage inputs; determining required direct-axis and quadrature-axis currents; calculating a current amplitude and angle based on the currents, and transmitting the calculated values along with corresponding rotor or grid angle and rotor or grid velocity data to a plurality of cluster boards; receiving, at a cluster board, the transmitted current amplitude, corresponding rotor or grid angle and rotor or grid velocity data; estimating an updated angle based on information received from the master board, the information comprising a rotor or grid angle, a rotor or grid velocity, and a phase difference associated with a phase sequence of the cluster board; generating a reference current; and comparing the reference current with a measured current at the cluster board and processing the error to generate a reference voltage output for pulse width modulation switching. In some embodiments, the operations can further comprise: predefining the required direct-axis and quadrature-axis currents based on AC charging power requirements; and transmitting a grid angle to the plurality of cluster boards.

### BRIEF DESCRIPTION OF DRAWINGS

FIGS. 1-2 illustrate block diagrams of example systems that can facilitate direct current control of SmartCells in electric vehicles in accordance with one or more embodiments described herein.
FIGS. 3 and 4 illustrate example methods for controlling power delivery in battery systems onboard vehicles in accordance with one or more embodiments described herein.
FIG. 5 illustrates an example system architecture for direct current control in accordance with one or more embodiments described herein.
FIG. 6 illustrates an example system architecture for voltage control in accordance with one or more embodiments described herein.
FIG. 7 illustrates a table showing an example use case comparing data bandwidth requirements between voltage control and direct current control in accordance with one or more embodiments described herein.
FIG. 8 illustrates a plot showing a simulation result in which a system uses direct current control to maintain stable output current despite a localized failure or deactivation of cluster boards in accordance with one or more embodiments described herein.
FIG. 9 is an example of a non-limiting computing environment in which one or more embodiments described herein can be implemented.
FIG. 10 is an example of a non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

As alluded to above, improved techniques for direct current control of SmartCells in electric vehicles are desirable, and various embodiments are described herein to this end and/or other ends. In accordance with one or more embodiments, the disclosed solution provides a system for vehicles that that can facilitate direct current control of SmartCells. In various embodiments, the onboard system of the vehicle can comprise a plurality of battery cell cluster units (e.g. battery cell clusters). Each battery cell unit can include one or more battery cells and a PCB device (referred to herein as a "cluster board") that can include several power electronic elements that enable them to intelligently control and manage operations of the respective battery cells to which they are connected. The cluster boards can enable the DC output from the respective battery cells to which they are connected to be converted into an AC to control one or more electric motors. In various embodiments, the onboard system of the vehicle can further comprise a master board. The master board can handle high level controls. The cluster boards can be connected to the master board to facilitate high level control.

In various embodiments, one or more of the battery cell units can comprise a single battery cell. In other embodiments, one or more of the battery cell units can comprise a cluster of battery cells, wherein the cluster can comprise two or more battery cells. The number of battery cells included in a cluster can vary. The battery cells can respectively comprise any type of rechargeable electric vehicle batteries. All or some of the battery cell units can include a cluster board formed thereon and electrically connected to one or more the battery cells respectively associated with the battery cell units. The manner in which the cluster board is physically attached to a single battery cell and/or a cluster of battery cells can vary. The manner in which the cluster board (or components thereof) is electrically connected to a single battery cell and/or cluster of battery cells can also vary. In some embodiments, a cluster board (or components thereof) may be electrically connected to at least one terminal of each battery cell of a cluster. In other embodiments, the PCB device (or components thereof) may be electrically connected to at least one terminal of at least one battery cell of a cluster. The battery cell units (and/or components thereof) can be electrically connected to one another (e.g., via hardwire connections) in series and/or in parallel in a suitable number to reach a desired voltage and/or to form independent subgroups of the battery cell units connected to different electrical systems of the electric vehicle. The battery cell units (and/or components thereof), and or subgroups of the battery cell units, can further be connected electrically (e.g., via hardwire connections) to one or more motors and/or systems of the vehicle.

In various embodiments, the respective cluster boards of the battery cell units can include a DCDC converter that can be used to generate a desired DC output voltage for feeding low voltage (LV) and/or high voltage (HV) electrical systems. The DCDC converters of the respective battery cell units can be connected in series and/or in parallel (e.g., via wired connections). The respective cluster boards can also include an H-bridge and each of the H-bridges can be connected in series (via wired connections). The battery cell units can feed the respective AC phase currents from to one or more motors via their respective battery cell clusters and H-bridge connections independent from their respective DCDC converters, which can feed the DC current to corresponding LV electrical systems or HV electrical systems to which they can be connected.

In various embodiments, a cluster board can include or correspond to a circuit board device that comprises electronic or electrical hardware (and software) components that enable the cluster board to intelligently control various operations of respective battery cells connected thereto, including supplying DC output and AC output to the corresponding electrical systems of the electric vehicle. The electronic or electrical hardware components can include, but are not limited to: a DCDC converter, a power module comprising an H-bridge with a number of power MOSFETs configured to convert DC to AC (among other functions), busbars, wires, ports, one or more sensors, one or more control units (e.g., comprising a microprocessor, a central processing unit (CPU) coupled to a memory device, or the like), a wireless communication component (e.g., a radio frequency (RF) transmitter/receiver, transceiver, or the like), and various other components.

In various embodiments, the battery cells of the SmartCell battery system can be charged via an external charging apparatus during inactive drive times.

In various embodiments, the cluster boards of each of the battery cell units can be connected wirelessly (e.g., via any suitable wireless communication technology) to a master board that can handle high level control. The master board and the battery cell units can be configured to operate in accordance with a server-client architecture, wherein the master board can communicate (i.e., broadcast, transmit, send, etc.) control information to respective battery cell units, and wherein the battery cell units can be configured to control operations of respective battery cell units in accordance with received control information. The operations can include operations related to active usage and inactive usage of the battery cells to supply power to one or more electrical systems of the vehicle (e.g., one or more LV electrical systems, one or more HV electrical systems and/or one or more motors), operations related charging the battery cells, operations related to monitoring parameters of the battery cells and/or the cluster boards, communication operations, and various others. In some embodiments, the cluster board can include a memory that can store computer or machine-executable components. The cluster board can further include a processing unit that can execute the machine-executable components stored in memory. In various embodiments, the cluster board can further include one or more sensors and various other PCB electronic components. The one or more sensors can comprise various types of sensors coupled to the battery cell cluster, individual battery cells and/or electrical hardware components of the cluster board configured to measure and/or detect various conditions associated with the battery cells, the cluster, and/or the battery cell unit. In various embodiments, the battery cells (e.g., individually) and/or the clusters of battery cells can be operated in different operating modes, including selectively providing a positive voltage output, a negative voltage output and no voltage output (e.g., bypass) on the cell level and/or on the cluster level. In some embodiments, the cluster board can be configured to regularly and/or continuously provide the master board with battery cell parameter information.

In various embodiments, the master board can further monitor the battery cell unit parameter information over time in association with detecting changes to states and conditions of the respective battery cell units and/or their respective battery cells. The master board can monitor current power demands of respective electrical systems of the vehicle, including one or more LV electrical systems, one or more HV electrical systems and one or more motors. In association with monitoring current power demands, the master board can also monitor vehicle operating context. Based on monitored battery cell unit parameter information, power demands and vehicle operating context, the master board can determine and communicate (e.g., transmit, broadcast, send, etc.) battery cell unit control information to respective battery cell units that directs the respective battery cell units how to operate their respective battery cells. The master board can further communicate battery cell unit control information to respective battery cell units and the battery cell units can in turn control operations of their respective battery cells in accordance with the control information. Each of the battery cell units can be configured to independently control operations of respective battery cells connected to the cluster boards of the respective battery cell units in accordance with the battery cell unit control information. The battery cell unit control information can include or correspond to scheduling information that directs the respective battery cell units when and how to operate, including when to activate and deactivate supplying AC and/or DC power to the respective electrical systems of the vehicle, how much power (e.g., voltage level and/or Ampere level) to provide, and when to activate reverse current flows in association with charging operations. Because each of the battery cell units can be independently controlled, the number of battery cell units and/or the number of battery cells being utilized to supply electrical current to electrical systems of the vehicle can be tailored based on power demands. The master board can selectively control utilization of the battery cell units and/or their respective battery cells as needed to meet the power demands, including utilizing only a portion of the battery cell units at any given time. The master board can selectively control activating some of the battery cell units and deactivating others of the battery cell units over the course of operation of the vehicle as needed to meet the power demands.

In various embodiments, the onboard computer system of the vehicle can comprise a memory that stores computer-executable components, and a processor that executes the computer executable components stored in the memory. These computer-executable components can include a direct current control component that transmits current amplitude requests, angle information, or priority orders from the master board to the cluster boards, and synchronizes the operation of the plurality of cluster boards by calculating a system reference angle based on the rotor angle, phase difference, and integrated rotor velocity to align the output of the battery cell clusters and produce a controlled AC voltage. In various embodiments, the direct current control component can enable the plurality of battery cell clusters to collectively generate a controlled AC voltage directly from the cells, eliminating the need for a conventional inverter. The direct current control component can orchestrate the operation of distributed cluster boards that are electrically connected to individual battery cells or battery cell clusters. Specifically, the direct current control component can transmit control parameters (e.g., current amplitude requests, electrical angle information, and/or priority orders) from the master board to each of the cluster boards. These control parameters can be calculated based on real-time vehicle operating context, battery cell states, and/or current power demands of the electric vehicle's electrical systems, including electric motors, low-voltage systems, and high-voltage systems. The direct current control component can reduce reliance on high-speed data exchange by allowing each cluster board to locally compute its respective output based on the parameters it receives. For example, the electrical angle information transmitted by the direct current control component can correspond to a rotor angle or grid angle, depending on whether the system is operating in a driving mode or a charging mode. Each cluster board can use this angle in conjunction with its assigned current amplitude to independently generate phase-aligned current waveforms. The priority order sent by the direct current control component can be used by the cluster boards to determine which clusters should be active or inactive at any given time, enabling dynamic load balancing, thermal distribution, and power optimization across the entire battery system. By enabling decentralized control and eliminating the need for a centralized high-frequency PWM-based inverter, the direct current control component can contribute to significant improvements in system efficiency, scalability, and thermal management. The direct current control component can support different operating modes, including driving and charging, by adjusting the type and timing of the control information transmitted to each cluster board. During driving, the direct current control component can compute control parameters based on torque, speed, and voltage inputs. During charging, the direct current control component can adjust its output to accommodate grid-synchronized parameters. In both scenarios, the direct current control component can facilitate the generation of synchronized, multi-phase AC output directly from the battery cells, using only integrated switching elements on the cluster boards.

In some embodiments, the computer-executable components can include a dynamic phase synchronization component that can coordinate operation of the plurality of cluster boards to align output of the battery cell clusters and produce a controlled AC voltage. The dynamic phase synchronization component can synchronize the output from the plurality of cluster boards to provide AC power suitable for propulsion or charging. The dynamic phase synchronization component can operate in conjunction with the direct current control component to ensure that each cluster board delivers its respective output in a phase-aligned and time-coordinated manner. The dynamic phase synchronization component can receive electrical angle inputs (e.g., rotor angle in driving mode or a grid angle in charging mode) and can use this information to generate phase references for each cluster board. These references can account for the required 120-degree phase shift between phases in a three-phase AC system, enabling the system to emulate traditional inverter-driven AC output without the need for a centralized inverter. The dynamic phase synchronization component can monitor and adjust timing alignment between cluster boards to account for variances in signal propagation, computational delay, or changes in vehicle operating conditions, ensuring high-fidelity waveform generation even under dynamic loads. The dynamic phase synchronization component can support real-time operational adjustments by responding to inputs from the master board, such as changes in torque demand, speed, or charging conditions. The dynamic phase synchronization component can dynamically reassign phase relationships or fine-tune angle offsets to optimize power quality and reduce harmonic distortion.

In some embodiments, the system can further comprise a status component that determines a current status of the vehicle. The status component can monitor various inputs, such as sensor signals, control signals, or vehicle operating conditions, to determine whether the vehicle is in a driving mode or a charging mode. This operational context can then be used to guide the behavior of other components, including the direct current control component and the dynamic phase synchronization component, enabling the system to respond intelligently to real-time demands and environmental conditions. When the status component determines that the vehicle is in driving mode, it can enable the direct current control component to transmit motor torque and speed demands from the master board to the distributed cluster boards. These values can be used to calculate current amplitude requests and angle information, allowing each cluster board to contribute to the generation of phase-coordinated AC output. Simultaneously, the dynamic phase synchronization component can generate a controlled AC voltage for vehicle propulsion by synchronizing the output of the multiple cluster boards based on the received motor torque and speed demands. This coordination ensures the AC waveform produced by the distributed battery cell clusters is correctly aligned with the operating requirements of the electric motor, delivering smooth and efficient propulsion. Conversely, when the status component determines that the vehicle is in charging mode, it can enable the dynamic phase synchronization component to synchronize power delivery with an external AC grid. In this mode, instead of referencing a motor rotor angle, the synchronization is based on a grid angle received from the external power source. The dynamic phase synchronization component can then adjust the output current and phase of the multiple cluster boards to match the voltage characteristics of the grid, allowing the battery system to safely and efficiently accept incoming AC power.

In various embodiments, each of the cluster boards can be independently connected to the master board, allowing for direct communication between the master board and the individual cluster boards without requiring a hierarchical or daisy-chained network structure. Each cluster board can operate independently from the others. Upon receiving control instructions from the master board via the direct current control component, each cluster board can locally determine how to regulate the power output of its associated battery cells.

In some embodiments, the direct current control component can enable real-time, dynamic adjustment of power delivery by monitoring the vehicle's changing power demands and updating the control parameters sent to the cluster boards accordingly. Because each cluster board can act independently based on the parameters it receives, the system can respond quickly and efficiently to fluctuating conditions without requiring continuous high-speed communication of full waveform data or switching instructions.

According to some embodiments, the dynamic phase synchronization component can ensure that the output of independently operating cluster boards is properly aligned in phase and time. The dynamic phase synchronization component can synchronize individual AC outputs of the cluster boards to collectively form a multi-phase AC voltage waveform that is suitable for driving propulsion motors or for interfacing with a charging grid.

In various embodiments, a method for controlling power delivery in a battery system onboard a vehicle can comprise: receiving speed, torque, and DC voltage inputs; determining required direct-axis and quadrature-axis currents; calculating a current amplitude and angle based on the currents, and transmitting the calculated values along with corresponding rotor or grid angle and rotor or grid velocity data to a plurality of cluster boards; receiving, at a cluster board, the transmitted current amplitude, corresponding rotor or grid angle and rotor or grid velocity data; estimating an updated angle based on information received from the master board, the information comprising a rotor or grid angle, a rotor or grid velocity, and a phase difference associated with a phase sequence of the cluster board; generating a reference current; and comparing the reference current with a measured current at the cluster board and processing the error to generate a reference voltage output for pulse width modulation switching.

In some embodiments, the method can further comprise predefining the required direct-axis and quadrature-axis currents based on AC charging power requirements; and transmitting a grid angle to the plurality of cluster boards. The determining the required direct-axis and quadrature-axis currents can further comprise using a maximum torque per ampere control algorithm to optimize torque efficiency during driving. The calculated values and corresponding rotor angle data can be transmitted to the plurality of cluster boards at a frequency of 1 kHz. The estimated updated rotor angle can be obtained by integrating the rotor velocity using an integration method. The system can send the rotor velocity to the cluster boards, where it can be integrated locally to compute an angle update. This integrated angle can then be added to the rotor angle (or grid angle in charging mode) along with the phase difference angle (e.g., 120 degrees for each phase in a three-phase system) to produce the estimated updated rotor angle. The reference current can be generated by multiplying the current amplitude with the computed phase angle derived from the estimated updated rotor angle. In some embodiments, processing the error between the reference current and the measured current can include applying a resonant proportional-integral (PI) controller to minimize steady-state error and improve dynamic response. Each cluster board can include integrated monitoring and switching elements that can enable real-time current measurement and voltage regulation at the cluster level.

The operations can further comprise: receiving speed, torque, and DC voltage inputs; determining required direct-axis (Id) and quadrature-axis (Iq) currents; calculating a current amplitude and angle based on the currents, and transmitting the calculated values and corresponding rotor velocity data to a plurality of cluster boards; receiving, at a cluster board, the transmitted current amplitude, angle, and rotor velocity; integrating the rotor velocity to estimate an updated angle and computing an adjusted phase angle based on a phase sequence of the cluster board; generating a reference current; and comparing the reference current with a measured current at the cluster board and processing the error to generate a reference voltage output for pulse width modulation (PWM) switching.

In some embodiments, the operations can further comprise: predefining the required direct-axis and quadrature-axis currents based on AC charging power requirements; and transmitting a grid angle to the plurality of cluster boards.

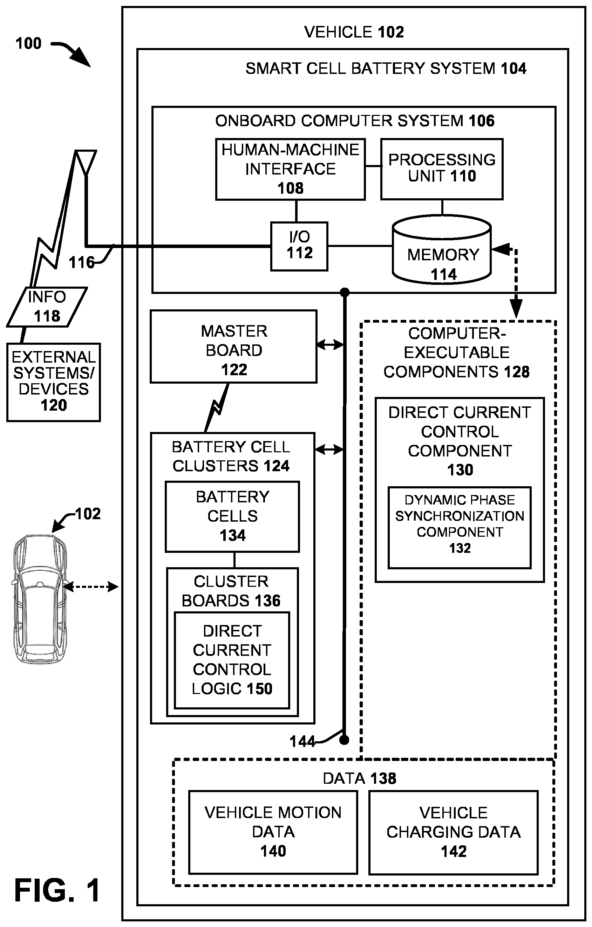

Turning now to the drawings, FIG. 1 illustrates a block diagram of an exemplary system 100 that can facilitate direct current control of SmartCells in electric vehicles. System 100 includes a vehicle 102 comprising a SmartCell battery system 104 integrated thereon or therein. The SmartCell battery system 104 includes one or more master board 122, one or more battery cell clusters 124, and an onboard computer system 106. The onboard computer system 106 comprises at least one memory 114 that stores computer-executable components 128 and data 138 that facilitate direct current control of SmartCells (e.g., battery cell clusters 124) onboard vehicle 102. These computer-executable components include (but are not limited to) direct current control component 130 and dynamic phase synchronization component 132.

The onboard computer system 106 can further include an input/output (I/O) component 112, wherein the I/O component 112 can be a transceiver configured to enable transmission/receipt of information 118 between the onboard computer system 106 and various external systems or devices 120. For example, the external systems or devices 120 can correspond to any type of device or computing system configured to wirelessly communicate (e.g., using radio frequency signals) with the onboard computer system 106, such as but not limited to, a mobile device associated with one or more users of the vehicle 102 (e.g., a smartphone, a smartwatch, a tablet, eyewear, a wearable headset or another type of wearable device), an external computer, an external computer system, an external application server, another vehicle's onboard computer system, and so on. The I/O component 112 can be communicatively coupled, via an antenna 116 to the remotely located devices and systems (e.g., external systems/devices 120). Any suitable technology can be utilized to enable the various embodiments presented herein, regarding transmission and receiving of information 118 between the onboard computer system 106 and one or more external systems/devices 120. Suitable technologies include BLUETOOTH^{®}, cellular technology (e.g., 3G, 4G, 5G), internet technology, ethernet technology, ultra-wideband (UWB), DECAWAVE^{®}, IEEE 802.15.4a standard-based technology, Wi-Fi technology, Radio Frequency Identification (RFID), Near Field Communication (NFC) radio technology, positioning data (GNSS), satellite radio, and the like.

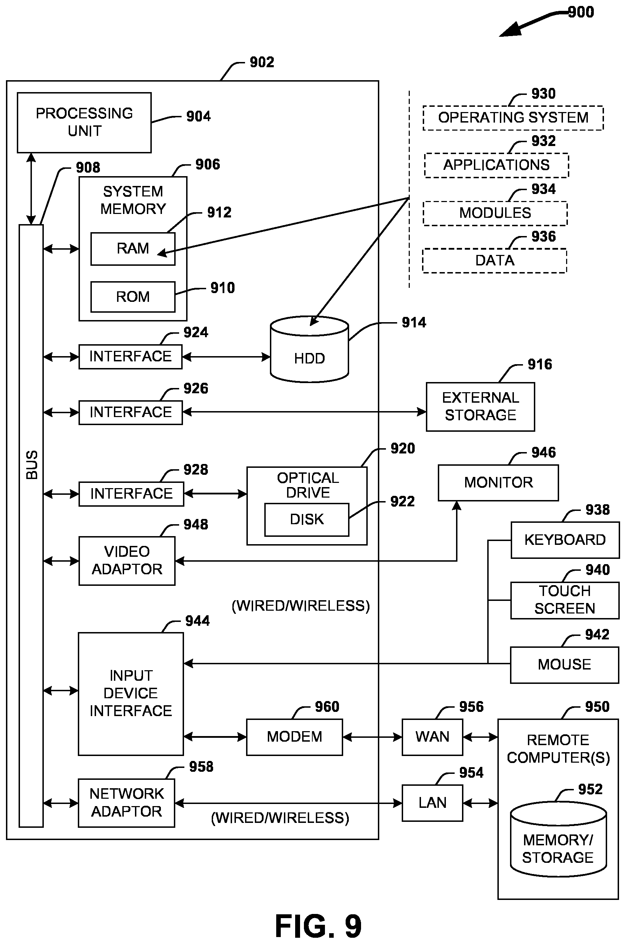

The onboard computer system 106 can also include a human-machine interface 108 that provides for receiving user input in association with utilizing the various features and functionalities of the computer-executable component 130 and presenting information to users. For example, the human-machine interfaces 108 can include or correspond to any suitable output device such as a display, a speaker, etc. and any suitable input device, such as a touchscreen display, a microphone, a keypad, a keyboard, a camera, a gesture input device/system, a voice input device/system, and the like. Examples of suitable input and output devices of the human-machine interface 108 devices are further provided with reference to FIG. 9. The SmartCell battery system 104 can also include a system bus 144 that communicatively and operatively couples the onboard computer system 106, the master board 122, and the one or more battery cell clusters 124 to one another using any suitable wired or wireless communication technology.

Vehicle 102 can correspond to any suitable type of transportation vehicle comprising one or more windows and adapted for use in scenarios in which monitoring the external environment is important, such as road conditions or navigation in complex environments. For instance, vehicle 102 can include or correspond to any suitable type of motor vehicle (e.g., a car, a truck, a van, a sport utility vehicle (SUV), etc.). In some implementations vehicle 102 can also include or correspond to an aircraft (e.g., an airplane, a helicopter, or the like), a watercraft, or another type of passenger transportation vehicle. In some embodiments, vehicle 102 can include or correspond to an autonomous vehicle that is capable of navigating and operating without (or some) human input.

In various embodiments, the onboard system 106 of the vehicle 102 can comprise a plurality of battery cell cluster units (e.g. battery cell clusters 124). Each battery cell unit 124 can include one or more battery cells 134 and a PCB device 136 (referred to herein as a "cluster board") that can include several power electronic elements that enable them to intelligently control and manage operations of the respective battery cells 134 to which they are connected. The cluster boards 136 can enable the DC output from the respective battery cells 134 to which they are connected to be converted into an AC to control one or more electric motors. In various embodiments, the onboard system 106 of the vehicle 102 can further comprise a master board 122. The master board 122 can handle high level controls. The cluster boards 136 can be connected to the master board 122 to facilitate high level control.

In various embodiments, one or more of the battery cell units 124 can comprise a single battery cell 134. In other embodiments, one or more of the battery cell units 124 can comprise a cluster 124 of battery cells 134, wherein the cluster 124 can comprise two or more battery cells 134. The number of battery cells 134 included in a cluster 124 can vary. The battery cells 134 can respectively comprise any type of rechargeable electric vehicle batteries. All or some of the battery cell units 124 can include a cluster board 136 formed thereon and electrically connected to one or more the battery cells 134 respectively associated with the battery cell units 124. The manner in which the cluster board 136 is physically attached to a single battery cell 134 and/or a cluster of battery cells 124 can vary. The manner in which the cluster board 136 (or components thereof) is electrically connected to a single battery cell 134 and/or cluster of battery cells 124 can also vary. In some embodiments, a cluster board 136 (or components thereof) may be electrically connected to at least one terminal of each battery cell 134 of a cluster 124. In other embodiments, the PCB device 136 (or components thereof) may be electrically connected to at least one terminal of at least one battery cell 134 of a cluster 124. The battery cell units 134 (and/or components thereof) can be electrically connected to one another (e.g., via hardwire connections) in series and/or in parallel in a suitable number to reach a desired voltage and/or to form independent subgroups of the battery cell units 124 connected to different electrical systems of the electric vehicle 102. The battery cell units 124 (and/or components thereof), and or subgroups of the battery cell units, can further be connected electrically (e.g., via hardwire connections) to one or more motors and/or systems of the vehicle 102.

In various embodiments, the respective cluster boards 136 of the battery cell units 124 can include a DCDC converter that can be used to generate a desired DC output voltage for feeding LV and/or HV electrical systems. The DCDC converters of the respective battery cell units 124 can be connected in series and/or in parallel (e.g., via wired connections). The respective cluster boards 136 can also include an H-bridge and each of the H-bridges can be connected in series (via wired connections). The battery cell units 124 can feed the respective AC phase currents from to one or more motors via their respective battery cell clusters 124 and H-bridge connections independent from their respective DCDC converters, which can feed the DC current to corresponding LV electrical systems or HV electrical systems to which they can be connected.

In various embodiments, a cluster board 136 can include or correspond to a circuit board device that comprises electronic or electrical hardware (and software) components that enable the cluster board 136 to intelligently control various operations of respective battery cells 134 connected thereto, including supplying DC output and AC output to the corresponding electrical systems of the electric vehicle 102. The electronic or electrical hardware components can include, but are not limited to: a DCDC converter, a power module comprising an H-bridge with a number of power MOSFETs configured to convert DC to AC or AC to DC (among other functions), busbars, wires, ports, one or more sensors, one or more control units (e.g., comprising a microprocessor, a central processing unit (CPU) coupled to a memory device, or the like), a wireless communication component (e.g., a radio frequency (RF) transmitter/receiver, transceiver, or the like), and various other components.

In various embodiments, the battery cells 134 of the SmartCell battery system 104 can be charged via an external charging apparatus during inactive drive times.

In various embodiments, the cluster boards 136 of each of the battery cell units 124 can be connected wirelessly (e.g., via any suitable wireless communication technology) to a master board 122 that can handle high level control. The master board 122 and the battery cell units 124 can be configured to operate in accordance with a server-client architecture, wherein the master board 122 can communicate (i.e., broadcast, transmit, send, etc.) control information to respective battery cell units 124, and wherein the battery cell units 124 can be configured to control operations of respective battery cell units 124 in accordance with received control information. The operations can include operations related to active usage and inactive usage of the battery cells 134 to supply power to one or more electrical systems of the vehicle 102 (e.g., one or more LV electrical systems, one or more HV electrical systems and/or one or more motors), operations related charging the battery cells 134, operations related to monitoring parameters of the battery cells 134 and/or the cluster boards 136, communication operations, and various others. In some embodiments, the cluster board 136 can include a memory that can store computer or machine-executable components. The cluster board 136 can further include a processing unit that can execute the machine-executable components stored in memory. In various embodiments, the cluster board 136 can further include one or more sensors and various other PCB electronic components. The one or more sensors can comprise various types of sensors coupled to the battery cell cluster 124, individual battery cells 134 and/or electrical hardware components of the cluster board 136 configured to measure and/or detect various conditions associated with the battery cells 134, the cluster 124, and/or the battery cell unit. In various embodiments, the battery cells 134 (e.g., individually) and/or the clusters of battery cells 124 can be operated in different operating modes, including selectively providing a positive voltage output, a negative voltage output and no voltage output (e.g., bypass) on the cell 134 level and/or on the cluster 124 level. In some embodiments, the cluster board 136 can be configured to regularly and/or continuously provide the master board 122 with battery cell 134 parameter information.

In various embodiments, the master board 122 can further monitor the battery cell 134 unit parameter information over time in association with detecting changes to states and conditions of the respective battery cell units 124 and/or their respective battery cells 134. The master board 122 can monitor current power demands of respective electrical systems of the vehicle 102, including one or more LV electrical systems, one or more HV electrical systems and one or more motors. In association with monitoring current power demands, the master board 122 can also monitor vehicle 102 operating context. Based on monitored battery cell unit 124 parameter information, power demands and vehicle 102 operating context, the master board 122 can determine and communicate (e.g., transmit, broadcast, send, etc.) battery cell unit 124 control information to respective battery cell units 124 that directs the respective battery cell units 124 how to operate their respective battery cells 134. The master board 122 can further communicate battery cell unit 124 control information to respective battery cell units 124 and the battery cell units 124 can in turn control operations of their respective battery cells 134 in accordance with the control information. Each of the battery cell units 124 can be configured to independently control operations of respective battery cells 134 connected to the cluster boards 136 of the respective battery cell units 124 in accordance with the battery cell unit 124 control information. The battery cell unit 124 control information can include or correspond to scheduling information that directs the respective battery cell units 124 when and how to operate, including when to activate and deactivate supplying AC and/or DC power to the respective electrical systems of the vehicle 102, how much power (e.g., voltage level and/or Ampere level) to provide, and when to activate reverse current flows in association with charging operations. Because each of the battery cell units 124 can be independently controlled, the number of battery cell units 124 and/or the number of battery cells 134 being utilized to supply electrical current to electrical systems of the vehicle 102 can be tailored based on power demands. The master board 122 can selectively control utilization of the battery cell units 124 and/or their respective battery cells 134 as needed to meet the power demands, including utilizing only a portion of the battery cell units 124 at any given time. The master board 122 can selectively control activating some of the battery cell units 124 and deactivating others of the battery cell units 124 over the course of operation of the vehicle 102 as needed to meet the power demands.

The direct current control component 130 can transmit current amplitude requests, angle information, or priority orders from the master board 122 to the cluster boards 136, and can synchronize the operation of the plurality of cluster boards 136 by calculating a system reference angle based on the rotor angle, phase difference, and integrated rotor velocity to align the output of the battery cell clusters 124 and produce a controlled AC voltage. In various embodiments, the direct current control component 130 can enable the plurality of battery cell clusters 124 to collectively generate a controlled AC voltage directly from the cells 134, eliminating the need for a conventional inverter. The direct current control component 130 can orchestrate the operation of distributed cluster boards 136 that are electrically connected to individual battery cells 134 or battery cell clusters 124. Specifically, the direct current control component 130 can transmit control parameters (e.g., current amplitude requests, electrical angle information, and/or priority orders) from the master board 122 to each of the cluster boards 136. These control parameters can be calculated based on real-time vehicle operating context, battery cell states, and/or current power demands of the electric vehicle's 102 electrical systems, including electric motors, low-voltage systems, and high-voltage systems. The direct current control component 130 can reduce reliance on high-speed data exchange by allowing each cluster board 136 to locally compute its respective output based on the parameters it receives. For example, the electrical angle information transmitted by the direct current control component 130 can correspond to a rotor angle or grid angle, depending on whether the system 104 is operating in a driving mode or a charging mode. Each cluster board 136 can use this angle in conjunction with its assigned current amplitude to independently generate phase-aligned current waveforms. The priority order sent by the direct current control component 130 can be used by the cluster boards 136 to determine which clusters 124 should be active or inactive at any given time, enabling dynamic load balancing, thermal distribution, and power optimization across the entire battery system 104. By enabling decentralized control and eliminating the need for a centralized high-frequency PWM-based inverter, the direct current control component 130 can contribute to significant improvements in system 104 efficiency, scalability, and thermal management. The direct current control component 130 can support different operating modes, including driving and charging, by adjusting the type and timing of the control information transmitted to each cluster board 136. During driving, the direct current control component 130 can compute control parameters based on torque, speed, and voltage inputs. During charging, the direct current control component 130 can adjust its output to accommodate grid-synchronized parameters. In both scenarios, the direct current control component 130 can facilitate the generation of synchronized, multi-phase AC output directly from the battery cells 134, using only integrated switching elements on the cluster boards 136.

The dynamic phase synchronization component 132 can coordinate operation of the plurality of cluster boards 136 to align output of the battery cell clusters 124 and produce a controlled AC voltage. The dynamic phase synchronization component 132 can synchronize the output from the plurality of cluster boards 136 to provide AC power suitable for propulsion or charging. The dynamic phase synchronization component 132 can operate in conjunction with the direct current control component 130 to ensure that each cluster board 136 delivers its respective output in a phase-aligned and time-coordinated manner. The dynamic phase synchronization component 132 can receive electrical angle inputs (e.g., rotor angle in driving mode or a grid angle in charging mode) and can use this information to generate phase references for each cluster board 136. These references can account for the required 120-degree phase shift between phases in a three-phase AC system, enabling the system 104 to emulate traditional inverter-driven AC output without the need for a centralized inverter. The dynamic phase synchronization component 132 can monitor and adjust timing alignment between cluster boards 136 to account for variances in signal propagation, computational delay, or changes in vehicle 102 operating conditions, ensuring high-fidelity waveform generation even under dynamic loads. The dynamic phase synchronization component 132 can support real-time operational adjustments by responding to inputs from the master board 122, such as changes in torque demand, speed, or charging conditions. The dynamic phase synchronization component 132 can dynamically reassign phase relationships or fine-tune angle offsets to optimize power quality and reduce harmonic distortion.

In some embodiments, the system can further comprise a status component that determines a current status of the vehicle. The status component can monitor various inputs, such as sensor signals, control signals, or vehicle operating conditions, to determine whether the vehicle is in a driving mode or a charging mode. This operational context can then be used to guide the behavior of other components, including the direct current control component and the dynamic phase synchronization component, enabling the system to respond intelligently to real-time demands and environmental conditions. When the status component determines that the vehicle is in driving mode, it can enable the direct current control component to transmit motor torque and speed demands from the master board to the distributed cluster boards. These values can be used to calculate current amplitude requests and angle information, allowing each cluster board to contribute to the generation of phase-coordinated AC output. Simultaneously, the dynamic phase synchronization component can generate a controlled AC voltage for vehicle propulsion by synchronizing the output of the multiple cluster boards based on the received motor torque and speed demands. This coordination ensures the AC waveform produced by the distributed battery cell clusters is correctly aligned with the operating requirements of the electric motor, delivering smooth and efficient propulsion. Conversely, when the status component determines that the vehicle is in charging mode, it can enable the dynamic phase synchronization component to synchronize power delivery with an external AC grid. In this mode, instead of referencing a motor rotor angle, the synchronization is based on a grid angle received from the external power source. The dynamic phase synchronization component can then adjust the output current and phase of the multiple cluster boards to match the voltage characteristics of the grid, allowing the battery system to safely and efficiently accept incoming AC power.

In various embodiments, each of the cluster boards 136 can be independently connected to the master board 122, allowing for direct communication between the master board 122 and the individual cluster boards 136 without requiring a hierarchical or daisy-chained network structure. Each cluster board 136 can operate independently from the others. Upon receiving control instructions from the master board 122 via the direct current control component 130, each cluster board 136 can locally determine how to regulate the power output of its associated battery cells 134.

In some embodiments, the direct current control component 130 can enable real-time, dynamic adjustment of power delivery by monitoring the vehicle's 102 changing power demands and updating the control parameters sent to the cluster boards 136 accordingly. Because each cluster board 136 can act independently based on the parameters it receives, the system 104 can respond quickly and efficiently to fluctuating conditions without requiring continuous high-speed communication of full waveform data or switching instructions.

According to some embodiments, the dynamic phase synchronization component 132 can ensure that the output of independently operating cluster boards 136 is properly aligned in phase and time. The dynamic phase synchronization component 132 can synchronize individual AC outputs of the cluster boards 136 to collectively form a multi-phase AC voltage waveform that is suitable for driving propulsion motors or for interfacing with a charging grid.

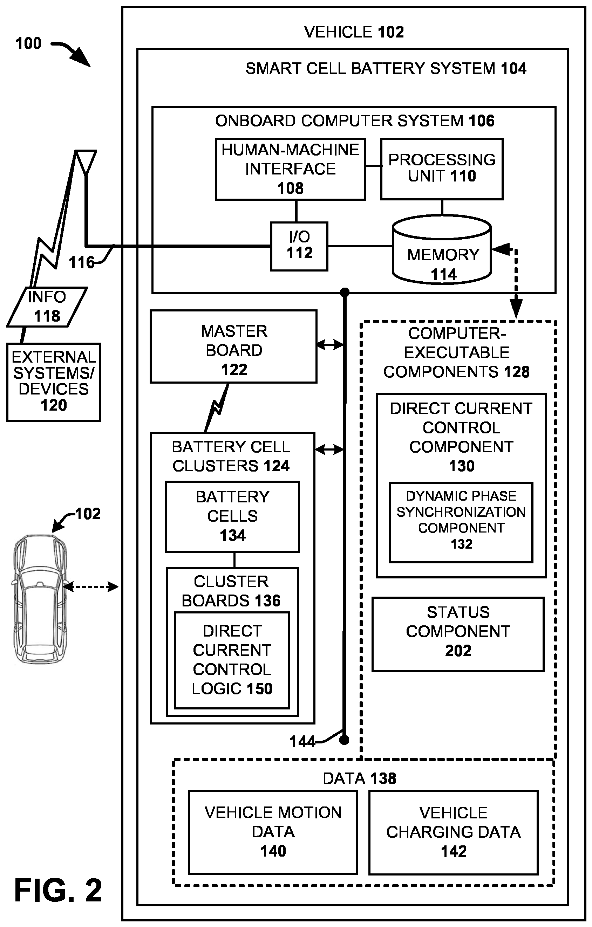

FIG. 2 illustrates an example system 200 that can facilitate direct current control of SmartCells in electric vehicles. System 200 includes a vehicle 102 comprising a SmartCell battery system 104 integrated thereon or therein. The SmartCell battery system 104 includes one or more master board 122, one or more battery cell clusters 124, and an onboard computer system 106. The onboard computer system 106 comprises at least one memory 114 that stores computer-executable components 128 and data 138 that facilitate direct current control of SmartCells (e.g., battery cell clusters 124) onboard vehicle 102. These computer-executable components include (but are not limited to) direct current control component 130, dynamic phase synchronization component 132, and status component 202. Repetitive description of like elements has been omitted for the sake of brevity.

Status component 202 can determine a current status of the vehicle 102. The status component 202 can monitor various inputs, such as sensor signals, control signals, or vehicle operating conditions, to determine whether the vehicle 102 is in a driving mode or a charging mode. This operational context can then be used to guide the behavior of other components, including the direct current control component 130 and the dynamic phase synchronization component 132, enabling the system to respond intelligently to real-time demands and environmental conditions. When the status component 202 determines that the vehicle 102 is in driving mode, it can enable the direct current control component 130 to transmit motor torque and speed demands from the master board 122 to the distributed cluster boards 136. These values can be used to calculate current amplitude requests and angle information, allowing each cluster board 136 to contribute to the generation of phase-coordinated AC output. Simultaneously, the dynamic phase synchronization component 132 can generate a controlled AC voltage for vehicle propulsion by synchronizing the output of the multiple cluster boards 136 based on the received motor torque and speed demands. This coordination ensures the AC waveform produced by the distributed battery cell clusters 124 is correctly aligned with the operating requirements of the electric motor, delivering smooth and efficient propulsion. Conversely, when the status component 202 determines that the vehicle 102 is in charging mode, it can enable the dynamic phase synchronization component 132 to synchronize power delivery with an external AC grid. In this mode, instead of referencing a motor rotor angle, the synchronization is based on a grid angle received from the external power source. The dynamic phase synchronization component 132 can then adjust the output current and phase of the multiple cluster boards 136 to match the voltage characteristics of the grid, allowing the battery system 104 to safely and efficiently accept incoming AC power.

The systems and/or devices are described herein with respect to interaction between one or more components. Such systems and/or components can include the components and/or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity but known by those of skill in the art.

One or more systems, devices, computer program products, and/or computer-implemented methods provided herein relate to direct current control of SmartCells in electric vehicles. A system can include a plurality of battery cell clusters, each cluster comprising one or more battery cells and an associated cluster board, wherein each cluster board includes integrated monitoring and switching elements. The system can further include a master board, configured to communicate with the plurality of cluster boards and provide control signals based on real-time power demands, that sends synchronization values to each cluster board. The system can include a processor that executes computer executable components stored in memory. The computer executable components can include a direct current control component that transmits current amplitude requests, angle information, or priority orders from the master board to the cluster boards; and a dynamic phase synchronization component that coordinates operation of the plurality of cluster boards to align output of the battery cell clusters and produce a controlled AC voltage.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processing unit 110 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processing unit 116) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

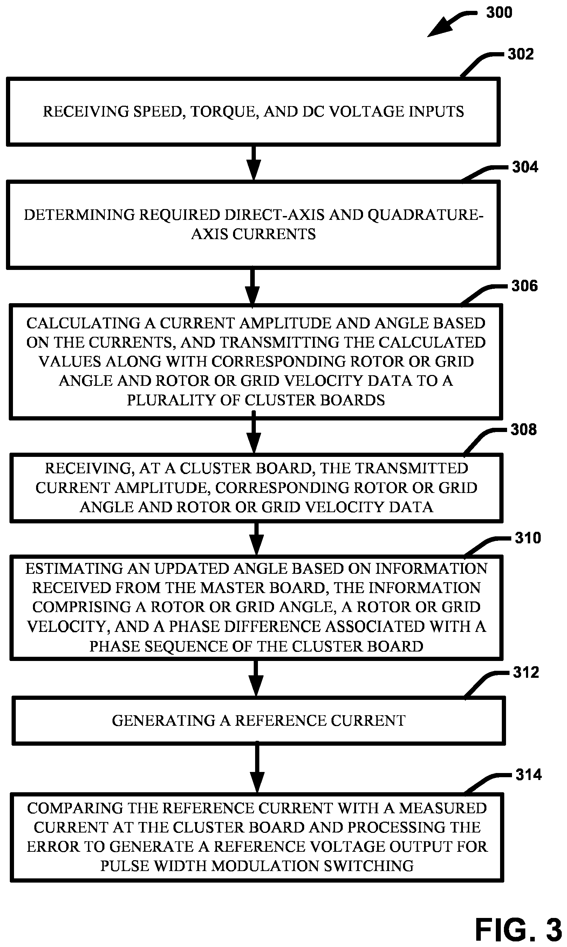

Next, FIG. 3 illustrates a flow diagram of a method 300 that can facilitate controlling power delivery in a battery system onboard a vehicle in accordance with some embodiments described herein, such as the system 200 of FIG. 2 and the system 100 of FIG. 1.

At 302, the method 300 can include receiving speed, torque, and DC voltage inputs. Speed can refer to the rotational velocity of the vehicle's electric motor, which can be measured through a motor position sensor or inferred from vehicle dynamics. Torque can refer to the force required or commanded to propel the vehicle forward, which can depend on acceleration input, load, or terrain. DC voltage can reflect the real-time state of the high-voltage battery system and can be monitored to ensure proper energy availability and voltage range compliance. These parameters can be collected by various sensors or vehicle subsystems and made available to the onboard control system. In some embodiments, the data can be routed to the high-level controller (e.g., the master board 122), which can analyze the operating context of the vehicle and prepare control inputs for downstream power regulation processes. This information can form the basis for calculating the specific electrical demands that will be translated into control signals for the distributed battery cell clusters.

At 304 the method 300 can include determining required direct-axis and quadrature-axis currents. Once speed, torque, and voltage inputs are received, the system can determine the direct-axis (Id) and quadrature-axis (Iq) current components necessary to meet propulsion requirements. These current components can be derived using control strategies such as Field-Oriented Control (FOC) or Maximum Torque Per Ampere (MTPA), both of which are well-established in electric motor control. Id can be used to control the magnetic flux within the motor, while Iq can be directly associated with torque production. The system (e.g., the master board 122) can compute the appropriate Id and Iq values using these algorithms in response to real-time vehicle demands. These values can be tailored for efficiency, thermal limits, or performance preferences depending on current operating conditions. Once calculated, the Id and Iq values can be converted into polar form to generate a current magnitude and phase angle.

At 306, the method 300 can include calculating a current amplitude and angle based on the currents, and transmitting the calculated values along with corresponding rotor or grid angle and rotor or grid velocity data to a plurality of cluster boards. Using the calculated Id and Iq currents, the system can determine a current amplitude (e.g., the vector magnitude of the two currents) and a corresponding electrical angle, representing the desired phase of the current waveform. In driving scenarios, this phase can be relative to the motor's rotor, while in charging scenarios, it can be relative to the grid phase. To enable synchronization across distributed battery cell clusters, the system can also determine the appropriate rotor or grid angle, representing the current angular position of the motor or the grid phase, and the associated rotor or grid velocity. These synchronization parameters can be calculated or acquired by the central control unit (e.g., the master board 122) and transmitted to the cluster boards. Each cluster board can receive the same fundamental parameters, ensuring consistent coordination across the system while still operating independently. Communication between the master board and the cluster boards can occur over wired or wireless channels, and the control data can be transmitted at a regular frequency (e.g., approximately 1 kHz) or another suitable rate, to maintain continuous and accurate control over the distributed AC waveform generation.

At 308, the method 300 can include receiving, at a cluster board (e.g., the cluster board 136), the transmitted current amplitude, corresponding rotor or grid angle, and rotor or grid velocity data. Each cluster board associated with a battery cell cluster can independently receive this control information from the system controller (e.g., the master board 122). The cluster board can use the received data to locally compute its portion of the total AC output waveform based on its assigned phase sequence and role within the multi-phase system. Because the system architecture enables each cluster board to operate independently, the transmitted data can be interpreted and acted upon without requiring real-time coordination or communication between cluster boards. The inclusion of rotor or grid angle and rotor or grid velocity can allow each board to locally estimate the appropriate system reference angle for waveform generation. Even if one or more cluster boards experience faults or latency, the remaining boards can continue functioning using their local logic and the high-level control instructions received from the master board.

At 310, the method 300 can include estimating an updated angle based on information received from the master board, the information comprising a rotor or grid angle, a rotor or grid velocity, and a phase difference associated with a phase sequence of the cluster board (e.g., cluster board 136). Each cluster board can use this received information to locally compute a system reference angle that aligns its output waveform with the intended AC phase, without requiring centralized computation or direct coordination with other cluster boards. Rather than performing a full integration of velocity locally, the cluster board can combine the rotor or grid angle with an angle update derived from the rotor or grid velocity, and apply a phase offset based on its assigned position in the multi-phase system (e.g., 0°, 120°, or 240°). This process can ensure each cluster board operates with the correct phase alignment relative to the motor or grid, enabling accurate and synchronized AC power generation. The estimated updated angle can serve as a dynamic reference for each cluster board to time its contribution to the total system output.

At 312, the method 300 can include generating a reference current. Based on the estimated updated angle and the received current amplitude, the cluster board can generate a reference current signal. This reference current can be computed by applying a sinusoidal function to the updated angle and scaling the result by the current amplitude. The resulting signal can define the ideal instantaneous current waveform that the battery cell cluster should output as part of its phase contribution to the total AC waveform. The use of the updated angle-calculated from the rotor or grid angle, rotor or grid velocity, and phase difference-can allow each cluster board to maintain synchronization with system-level timing while operating independently. Because each cluster board calculates its own reference current using shared high-level synchronization data, the system can collectively generate a high-quality AC output waveform without requiring a centralized inverter. Each cluster board can therefore act as a distributed, intelligent power conversion unit, directly converting the battery cells' DC output into a synchronized AC phase contribution.

At 314, the method 300 can include comparing the reference current with a measured current at the cluster board and processing the error to generate a reference voltage output for pulse width modulation switching.

Each cluster board can compare the reference current to the measured current flowing through the output of the battery cells. The difference between these two values (i.e., current error) can be used as input to a local control algorithm, such as a resonant proportional-integral (PI) controller. This controller can process the error signal and generate a reference voltage output that can determine how to control the cluster board's switching circuitry. The reference voltage can be applied through pulse width modulation (PWM) switching of power electronics integrated into the cluster board (e.g., an H-bridge or similar topology). PWM can allow precise control over the effective output voltage by modulating the duty cycle of the battery cell connection. This voltage can then drive the current output to match the reference waveform, enabling each cluster board to deliver its portion of the synchronized AC signal. By repeating this process in real time across all active cluster boards, the system can produce an efficient, high-quality AC output directly from distributed battery cells.

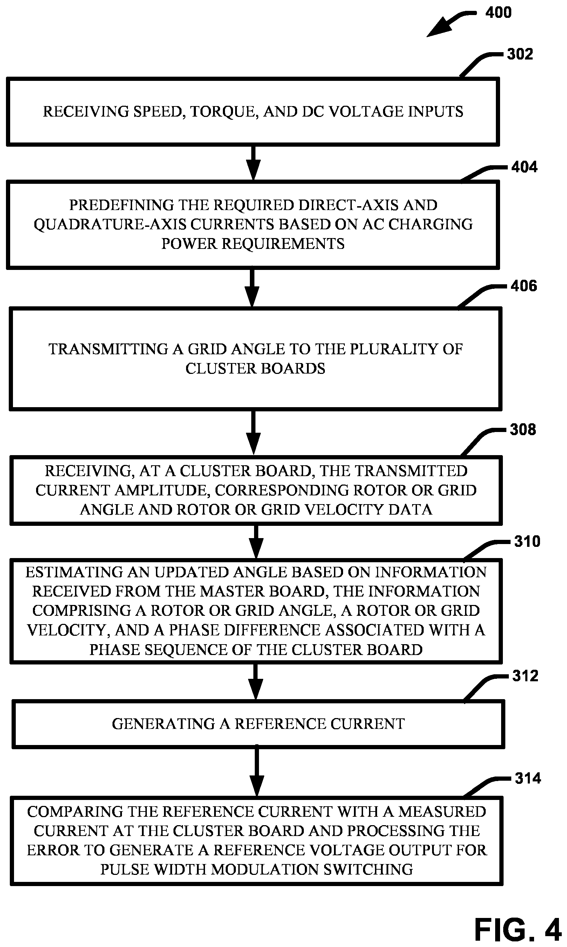

Next, FIG. 4 illustrates a flow diagram of a method 400 that can facilitate controlling power delivery in a battery system onboard a vehicle in accordance with some embodiments described herein, such as the system 200 of FIG. 2 and the system 100 of FIG. 1. While the method 400 is described relative to the system 200 of FIG. 2, the method 400 can be applicable also to other systems described herein. Repetitive description of like elements and/or processes employed in respective embodiments is omitted for sake of brevity.

At 404, the method 400 can include predefining the required direct-axis and quadrature-axis currents based on AC charging power requirements. The system can enter a charging mode rather than a propulsion mode, and the required direct-axis (Id) and quadrature-axis (Iq) currents can be predefined instead of being dynamically calculated based on vehicle speed and torque inputs. In the context of AC charging (e.g., when the vehicle is connected to an external grid or wall-mounted AC charger), the system does not rely on motor control demands, but rather on known or expected charging power levels. The charging power requirement can be determined based on the capabilities of the external charger, the state of charge of the battery pack, battery temperature, and other system-level parameters. Once the AC charging power requirement is known, the appropriate Id and Iq values can be selected or computed in advance. These values can be stored in memory (e.g., within the master board 122 or another control unit) and retrieved when the system enters charging mode. By predefining these values, the system can simplify control logic and ensure stable charging performance. The selected Id and Iq values can ensure that the total current delivered by the cluster boards meets the desired power transfer rate, while maintaining battery health, thermal limits, and voltage compliance. These currents can then be converted into a current amplitude and electrical angle, just as in the driving mode, in preparation for transmission to the cluster boards.

At 406, the method 400 can include transmitting a grid angle to the plurality of cluster boards. In charging mode, rather than synchronizing to a rotor position as in driving mode, the system can synchronize to the phase of the external AC grid, which can be represented by a grid angle. The grid angle can correspond to the instantaneous phase of the voltage waveform present at the AC charging interface. This value can be determined by measuring the incoming AC signal using voltage or phase-detection circuitry integrated into the vehicle's onboard systems (e.g., an onboard charger or interface module connected to the master board 122). Once determined, the grid angle can be transmitted from the central controller (e.g., the master board 122) to each of the cluster boards. The grid angle can serve as the reference phase against which each cluster board aligns its output waveform. When the cluster boards receive the current amplitude and angle (derived from the predefined Id and Iq), along with the grid angle, they can generate synchronized AC current that is phase-matched with the incoming grid voltage.

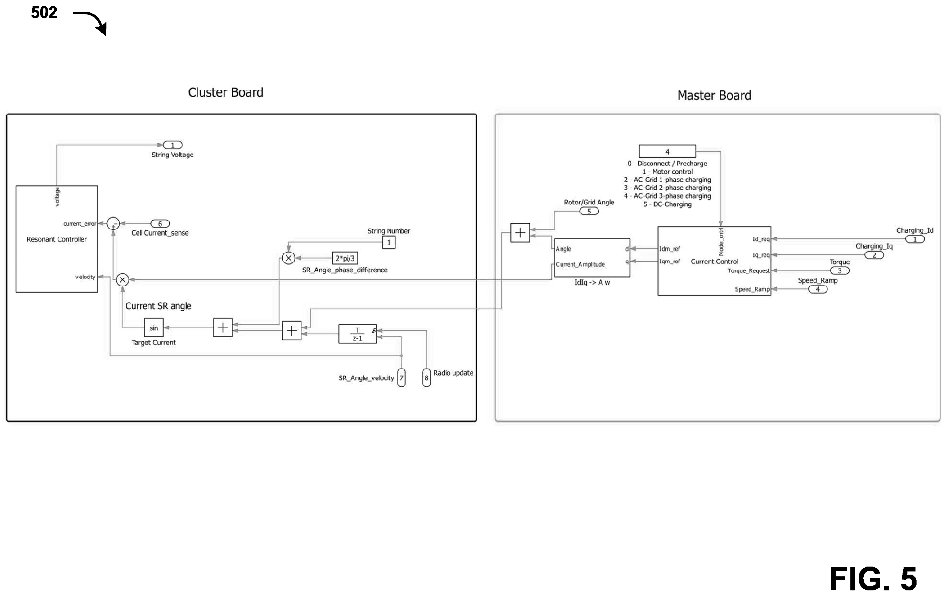

Next, FIG. 5 an example system architecture for direct current control in accordance with one or more embodiments described herein. As shown, the system enables a distributed control approach that eliminates the need for traditional centralized inverter-based voltage control by leveraging intelligent cluster boards integrated with each battery cell cluster. The system architecture depicted in FIG. 5 can support multiple operational modes, including a driving mode and an AC charging mode, with real-time control signals generated by a high-level controller (e.g., the master board) and executed locally by distributed cluster boards.

In driving mode, the system can receive inputs such as speed, torque, and DC voltage, which can be processed through a Maximum Torque Per Ampere (MTPA) control algorithm to determine the required direct-axis (Id) and quadrature-axis (Iq) currents. These Id and Iq values can then be used to calculate a current amplitude and electrical angle, which can be transmitted from the master board to each of the cluster boards at a frequency of approximately 1 kHz. The control data transmitted can also include a rotor angle, which can be used as a reference to align the timing of each cluster board's output with the motor's rotational position. Each cluster board, which can be independently connected to the master board and can operate independently from the other cluster boards, can receive the transmitted current amplitude, electrical angle, and rotor angle. Within each cluster board, a discrete integrator can be used to integrate rotor velocity and give an updated angle, which can be combined with a phase offset (e.g., 120°) based on the assigned phase sequence (e.g., phase A, B, or C) of the cluster. This process can result in an adjusted phase angle specific to each cluster board. The cluster board can then multiply the received current amplitude by the adjusted angle to compute a reference current waveform. This reference current can be compared to the measured current at the cluster board, and the resulting current error can be processed using a resonant proportional-integral (PI) controller. The PI controller can generate a reference voltage output based on the error, which can then be used to drive pulse width modulation (PWM) switching signals for the power electronics (e.g., an H-bridge) on the cluster board. Using this approach, each cluster board can locally regulate its own output in response to real-time error correction, enabling it to contribute a phase-aligned portion of the total AC waveform that can be delivered to the electric motor for propulsion.

In AC charging mode, a modified version of the same control framework can be applied. Instead of dynamically computing Id and Iq currents based on speed and torque, these values can be predefined based on the AC charging power requirements. Additionally, instead of receiving rotor angle information, the cluster boards can receive a grid angle, which can be used to align the output phase of each cluster board with the phase of an external AC charging source. The steps involving current amplitude calculation, phase adjustment, reference current generation, current comparison, and PWM voltage output can remain the same as those in driving mode.

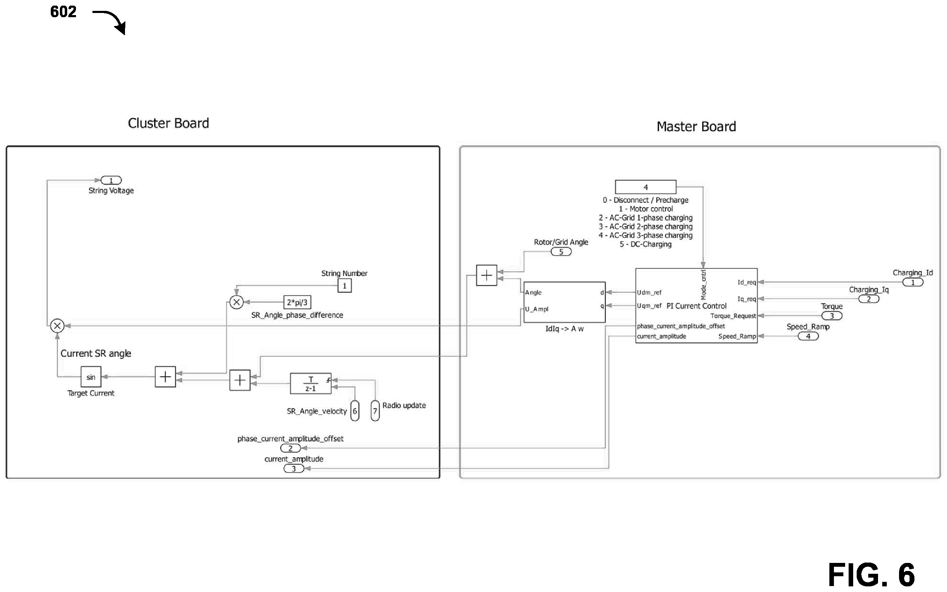

Next, FIG. 6 illustrates an example system architecture for voltage control in accordance with one or more embodiments described herein. This figure can represent a former approach used in SmartCell-based battery systems prior to the development of direct current control. In the voltage control architecture shown in FIG. 6, the system can follow a more conventional inverter-like control sequence, where the master board can remain heavily involved in calculating and distributing voltage-phase-specific control information to the distributed cluster boards. In driving mode, the system can begin by receiving vehicle inputs such as speed, torque, and DC voltage, which can be processed by a Maximum Torque Per Ampere (MTPA) control algorithm to determine the required direct-axis (Id) and quadrature-axis (Iq) currents. These target Id and Iq values can then be compared with the measured Id and Iq currents, which can be obtained by performing a Park transformation on the three-phase current values (Ia, Ib, and Ic). The Park transformation can convert the time-varying three-phase system into a rotating reference frame, allowing for simplified control using DC-like quantities. The resulting current error between the target and measured Id/Iq can be processed by a standard proportional-integral (PI) controller to generate control voltages Ud and Uq. These voltages can then be transformed into a voltage amplitude (U_Amplitude) and a corresponding electrical angle. This electrical angle can be added to the rotor angle to create a final phase reference. Additionally, a phase current amplitude offset can be calculated and included to provide a margin for compensation in cases where individual cluster boards cannot deliver their full output. All of this information-including voltage amplitude, final electrical angle, rotor angle, and phase current amplitude offset-can be transmitted by the master board to the cluster boards at a frequency of approximately 1 kHz. Upon receiving this data, each cluster board can operate according to its assigned phase sequence (e.g., A, B, or C). The board can apply a discrete integrator to feed forward the transmitted rotor velocity, and this value can be added to the received angle along with a 120° phase offset depending on the board's role in the three-phase system. Using the adjusted angle, the cluster board can multiply the received voltage amplitude with the angle to generate a reference voltage. This reference voltage can then be used to drive the pulse width modulation (PWM) logic on the cluster board, producing the output waveform required for motor propulsion.

In AC charging mode, the voltage control process can remain largely the same. However, instead of using MTPA to compute the required Id and Iq currents, the values can be preset based on the AC charging power requirements. Additionally, the rotor angle used in driving mode can be replaced with a grid angle corresponding to the phase of the external AC charging source. The remaining control steps (e.g., current transformation, PI voltage control, voltage amplitude and angle computation, transmission to the cluster boards, and PWM modulation) can proceed identically to those in driving mode. This architecture, while effective, can place a higher computational and communication burden on the master board and can be more complex compared to the improved direct current control architecture shown in FIG. 5.

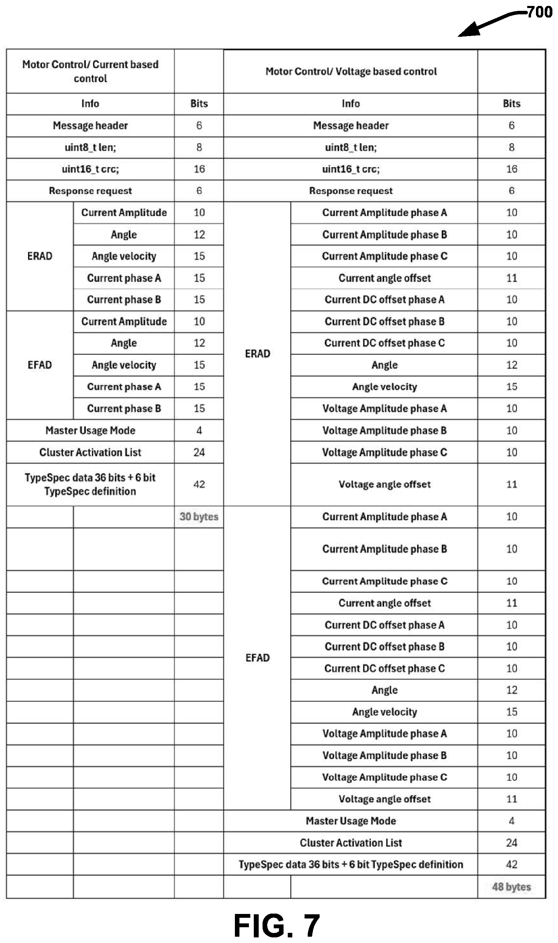

Next, FIG. 7 illustrates a table 700 showing an example use case comparing data bandwidth requirements between voltage control and direct current control in accordance with one or more embodiments described herein. The table 700 can highlight how the direct current control architecture can significantly reduce the amount of data that must be transmitted between the master board and the distributed cluster boards, resulting in improved communication efficiency and system scalability. In traditional voltage control, the master board can be required to send a larger set of control parameters to each cluster board to ensure proper synchronization and power output. These parameters can include not only the current amplitude, but also the voltage amplitude, the electrical angle, and the current DC offset (which can be necessary when each phase is measuring slightly different current values). This larger dataset can increase the communication overhead and limit the system's responsiveness, particularly as the number of cluster boards or control frequency increases. In contrast, under the direct current control approach, the master board can transmit only the current amplitude, electrical angle, and a simple priority order, omitting the need to send voltage amplitude and current DC offset values. As a result, the amount of control data that must be transmitted to each cluster board can be significantly reduced. This streamlined communication can lower the required data bandwidth across the system, enabling faster response times and reducing the burden on the central controller. FIG. 7 and Table 700 can therefore illustrate the efficiency advantage of direct current control over voltage control, particularly in applications with high cluster board counts or strict timing constraints.

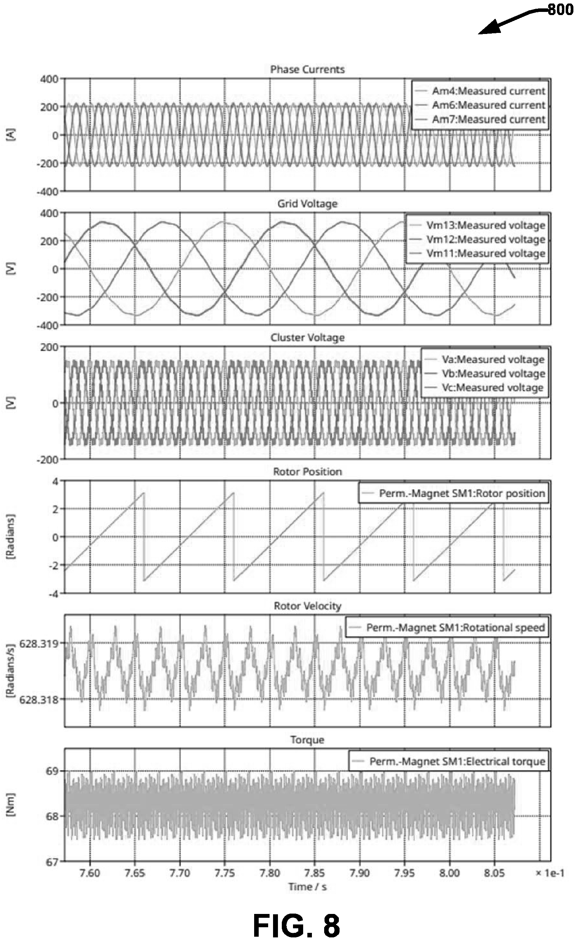

Next, FIG. 8 illustrates a plot 800 showing a simulation result in which the system uses direct current control to maintain stable output current despite a localized failure or deactivation of cluster boards. The plot 800 demonstrates that a drop in two cluster boards in Phase A does not impact the overall output current waveform. In the illustrated scenario, two cluster boards in Phase A were intentionally turned off at 0.8 seconds to simulate a fault or selective deactivation. Despite the sudden removal of those two clusters, the system maintained the expected output current. This was made possible by the direct current control architecture, which can allow the remaining active clusters in the same phase to compensate in real time. The system can dynamically reassign priority and output demand to other clusters connected in series, ensuring uninterrupted waveform generation. Plot 800 thus highlights a key advantage of direct current control: each cluster board can operate independently based on control inputs such as current amplitude, angle, and priority, rather than relying on tightly coupled voltage control schemes. When one or more clusters are deactivated (e.g., by fault or design), the system can adapt by activating other available clusters, thereby maintaining phase balance and output continuity without intervention from a centralized inverter.

In order to provide additional context for various embodiments described herein, FIG. 9 and the following discussion are intended to provide a brief, general description of a suitable computing environment 900 in which the various embodiments of the embodiment described herein can be implemented. While the embodiments have been described above in the general context of computer-executable instructions that can run on one or more computers, those skilled in the art will recognize that the embodiments can also be implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 9, the example environment 900 for implementing various embodiments of the aspects described herein includes a computer 902, the computer 902 including a processing unit 904, a system memory 906 and a system bus 908. The system bus 908 couples system components including, but not limited to, the system memory 906 to the processing unit 904. The processing unit 904 can be any of various commercially available processors, field-programmable gate array, AI accelerator application-specific integrated circuit, or other suitable processors. Dual microprocessors and other multi-processor architectures can also be employed as the processing unit 904.

The system bus 908 can be any of several types of bus structure that can further interconnect to a memory bus (with or without a memory controller), a peripheral bus, and a local bus using any of a variety of commercially available bus architectures. The system memory 906 includes ROM 910 and RAM 912. A basic input/output system (BIOS) can be stored in a nonvolatile memory such as ROM, erasable programmable read only memory (EPROM), EEPROM, which BIOS contains the basic routines that help to transfer information between elements within the computer 902, such as during startup. The RAM 912 can also include a high-speed RAM such as static RAM for caching data. It is noted that unified Extensible Firmware Interface(s) can be utilized herein.

The computer 902 further includes an internal hard disk drive (HDD) 914 (e.g., EIDE, SATA), one or more external storage devices 916 (e.g., a magnetic floppy disk drive (FDD) 916, a memory stick or flash drive reader, a memory card reader, etc.) and an optical disk drive 920 (e.g., which can read or write from a disc 922 such as a CD-ROM disc, a DVD, a BD, etc.). While the internal HDD 914 is illustrated as located within the computer 902, the internal HDD 914 can also be configured for external use in a suitable chassis (not shown). Additionally, while not shown in environment 900, a solid-state drive (SSD) could be used in addition to, or in place of, an HDD 914. The HDD 914, external storage device(s) 916 and optical disk drive 920 can be connected to the system bus 908 by an HDD interface 924, an external storage interface 926 and an optical drive interface 928, respectively. The interface 924 for external drive implementations can include at least one or both of Universal Serial Bus (USB) and Institute of Electrical and Electronics Engineers (IEEE) 1364 interface technologies. Other external drive connection technologies are within contemplation of the embodiments described herein.

The drives and their associated computer-readable storage media provide nonvolatile storage of data, data structures, computer-executable instructions, and so forth. For the computer 902, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 912, including an operating system 930, one or more application programs 932, other program modules 934 and program data 936. All or portions of the operating system, applications, modules, and/or data can also be cached in the RAM 912. The systems and methods described herein can be implemented utilizing various commercially available operating systems or combinations of operating systems.

Computer 902 can optionally comprise emulation technologies. For example, a hypervisor (not shown) or other intermediary can emulate a hardware environment for operating system 930, and the emulated hardware can optionally be different from the hardware illustrated in FIG. 9. In such an embodiment, operating system 930 can comprise one virtual machine (VM) of multiple VMs hosted at computer 902. Furthermore, operating system 930 can provide runtime environments, such as the Java runtime environment or the .NET framework, for applications 932. Runtime environments are consistent execution environments that allow applications 932 to run on any operating system that includes the runtime environment. Similarly, operating system 930 can support containers, and applications 932 can be in the form of containers, which are lightweight, standalone, executable packages of software that include, e.g., code, runtime, system tools, system libraries and settings for an application.

Further, computer 902 can be enabled with a security module, such as a trusted processing module (TPM). For instance, with a TPM, boot components hash next in time boot components, and wait for a match of results to secured values, before loading a next boot component. This process can take place at any layer in the code execution stack of computer 902, e.g., applied at the application execution level or at the operating system (OS) kernel level, thereby enabling security at any level of code execution.

A user can enter commands and information into the computer 902 through one or more wired/wireless input devices, e.g., a keyboard 938, a touch screen 940, and a pointing device, such as a mouse 942. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 904 through an input device interface 944 that can be coupled to the system bus 908, but can be connected by other interfaces, such as a parallel port, an IEEE 1394 serial port, a game port, a USB port, an IR interface, a BLUETOOTH^{®} interface, etc.

A monitor 946 or other type of display device can also be connected to the system bus 908 via an interface, such as a video adapter 948. In addition to the monitor 946, a computer typically includes other peripheral output devices (not shown), such as speakers, printers, etc.

The computer 902 can operate in a networked environment using logical connections via wired and/or wireless communications to one or more remote computers, such as a remote computer(s) 950. The remote computer(s) 950 can be a workstation, a server computer, a router, a personal computer, portable computer, microprocessor-based entertainment appliance, a peer device or other common network node, and typically includes many or all of the elements described relative to the computer 902, although, for purposes of brevity, only a memory/storage device 952 is illustrated. The logical connections depicted include wired/wireless connectivity to a local area network (LAN) 954 and/or larger networks, e.g., a wide area network (WAN) 956. Such LAN and WAN networking environments are commonplace in offices and companies, and facilitate enterprise-wide computer networks, such as intranets, all of which can connect to a global communications network, e.g., the Internet.

When used in a LAN networking environment, the computer 902 can be connected to the local network 954 through a wired and/or wireless communication network interface or adapter 958. The adapter 958 can facilitate wired or wireless communication to the LAN 954, which can also include a wireless access point (AP) disposed thereon for communicating with the adapter 958 in a wireless mode.

When used in a WAN networking environment, the computer 902 can include a modem 960 or can be connected to a communications server on the WAN 956 via other means for establishing communications over the WAN 956, such as by way of the Internet. The modem 960, which can be internal or external and a wired or wireless device, can be connected to the system bus 908 via the input device interface 944. In a networked environment, program modules depicted relative to the computer 902 or portions thereof can be stored in the remote memory/storage device 952. It will be appreciated that the network connections shown are example and other means of establishing a communications link between the computers can be used.

When used in either a LAN or WAN networking environment, the computer 902 can access cloud storage systems or other network-based storage systems in addition to, or in place of, external storage devices 916 as described above. Generally, a connection between the computer 902 and a cloud storage system can be established over a LAN 954 or WAN 956 e.g., by the adapter 958 or modem 960, respectively. Upon connecting the computer 902 to an associated cloud storage system, the external storage interface 926 can, with the aid of the adapter 958 and/or modem 960, manage storage provided by the cloud storage system as it would other types of external storage. For instance, the external storage interface 926 can be configured to provide access to cloud storage sources as if those sources were physically connected to the computer 902.

The computer 902 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

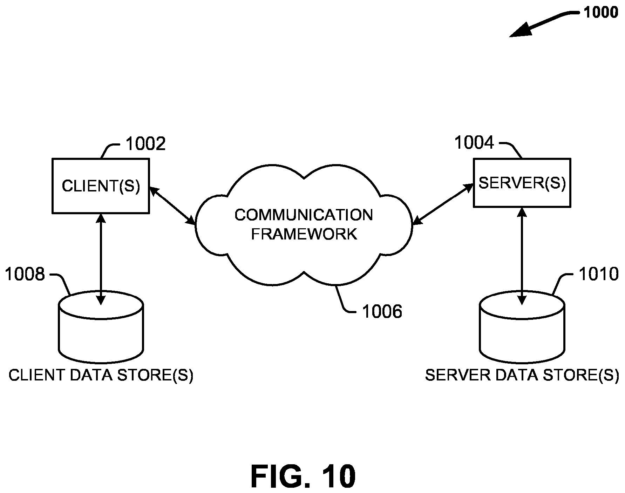

Referring now to FIG. 10, there is illustrated a schematic block diagram of a computing environment 1000 in accordance with this specification. The system 1000 includes one or more client(s) 1002, (e.g., computers, smart phones, tablets, cameras, PDA's). The client(s) 1002 can be hardware and/or software (e.g., threads, processes, computing devices). The client(s) 1002 can house cookie(s) and/or associated contextual information by employing the specification, for example.

The system 1000 also includes one or more server(s) 1004. The server(s) 1004 can also be hardware or hardware in combination with software (e.g., threads, processes, computing devices). The servers 1004 can house threads to perform transformations of media items by employing aspects of this disclosure, for example. One possible communication between a client 1002 and a server 1004 can be in the form of a data packet adapted to be transmitted between two or more computer processes wherein data packets may include coded analyzed headspaces and/or input. The data packet can include a cookie and/or associated contextual information, for example. The system 1000 includes a communication framework 1006 (e.g., a global communication network such as the Internet) that can be employed to facilitate communications between the client(s) 1002 and the server(s) 1004.

Communications can be facilitated via a wired (including optical fiber) and/or wireless technology. The client(s) 1002 are operatively connected to one or more client data store(s) 1008 that can be employed to store information local to the client(s) 1002 (e.g., cookie(s) and/or associated contextual information). Similarly, the server(s) 1004 are operatively connected to one or more server data store(s) 1010 that can be employed to store information local to the servers 1004. Further, the client(s) 1002 can be operatively connected to one or more server data store(s) 1010.

In one exemplary implementation, a client 1002 can transfer an encoded file, (e.g., encoded media item), to server 1004. Server 1004 can store the file, decode the file, or transmit the file to another client 1002. It is noted that a client 1002 can also transfer uncompressed file to a server 1004 and server 1004 can compress the file and/or transform the file in accordance with this disclosure. Likewise, server 1004 can encode information and transmit the information via communication framework 1006 to one or more clients 1002.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A system onboard a vehicle, comprising: a plurality of battery cell clusters, each cluster comprising one or more battery cells and an associated cluster board, wherein each cluster board includes integrated monitoring and switching elements; a master board, configured to communicate with the plurality of cluster boards and provide control signals based on real-time power demands, that sends synchronization values to each cluster board; a memory that stores computer executable components; and a processor that executes the computer executable components stored in memory, wherein the computer executable components comprise: a direct current control component that transmits current amplitude requests, angle information, or priority orders from the master board to the cluster boards, and synchronizes the operation of the plurality of cluster boards by calculating a system reference angle based on the rotor angle, phase difference, and integrated rotor velocity to align the output of the battery cell clusters and produce a controlled AC voltage.
2. The system of any one or more preceding clause(s), wherein the direct current control component enables the plurality of battery cell clusters to collectively generate a controlled AC voltage directly from the cells without requiring a conventional inverter.
3. The system of any one or more preceding clause(s), wherein the direct current control component synchronizes the output from the plurality of cluster boards to provide AC power suitable for propulsion or charging.
4. The system of any one or more preceding clause(s), wherein each cluster board operates independently of one another.
5. The system of any one or more preceding clause(s), wherein each of the cluster boards are independently connected to the master board.
6. The system of any one or more preceding clause(s), wherein the direct current control component enables the cluster boards to independently regulate power output based on received instructions.
7. The system of any one or more preceding clause(s), wherein the direct current control component adjusts power delivery dynamically to meet real-time power demands of the vehicle.
8. The system of any one or more preceding clause(s), further comprising a status component that determines a current status of the vehicle.
9. The system of any one or more preceding clause(s), wherein the status component determines the vehicle is driving, the direct current control component transmits motor torque and speed demands of the vehicle from the master board to the cluster boards, and the dynamic phase synchronization component generates AC voltage for vehicle propulsion by synchronizing the output of multiple cluster boards based on the motor torque and speed demands of the vehicle.
10. The system of any one or more preceding clause(s), wherein the status component determines the vehicle is charging, and the dynamic phase synchronization component synchronizes power delivery with an external grid by adjusting output current and phase of multiple cluster boards to match grid voltage characteristics.
11. A method for controlling power delivery in a battery system onboard a vehicle, the method comprising: receiving speed, torque, and DC voltage inputs; determining required direct-axis and quadrature-axis currents; calculating a current amplitude and angle based on the currents, and transmitting the calculated values along with corresponding rotor or grid angle and rotor or grid velocity data to a plurality of cluster boards; receiving, at a cluster board, the transmitted current amplitude, corresponding rotor or grid angle and rotor or grid velocity data; estimating an updated angle based on information received from the master board, the information comprising a rotor or grid angle, a rotor or grid velocity, and a phase difference associated with a phase sequence of the cluster board; generating a reference current; and comparing the reference current with a measured current at the cluster board and processing the error to generate a reference voltage output for pulse width modulation switching.
12. The method of any one or more preceding clause(s), further comprising: predefining the required direct-axis and quadrature-axis currents based on AC charging power requirements; and transmitting a grid angle to the plurality of cluster boards.
13. The method of any one or more preceding clause(s), wherein determining the required direct-axis and quadrature-axis currents comprises using a maximum torque per ampere control algorithm to optimize torque efficiency during driving.
14. The method of any one or more preceding clause(s), wherein the calculated values and corresponding rotor velocity data are transmitted to the plurality of cluster boards at a frequency of approximately 1 kHz, or at another suitable transmission frequency based on system requirements.
15. The method of any one or more preceding clause(s), wherein the integrated rotor velocity is used to obtain an angle update, and the updated angle is computed by adding the angle update to the rotor angle and the phase difference angle based on the respective phase sequence of the cluster board.
16. The method of any one or more preceding clause(s), wherein the reference current is generated by multiplying the current amplitude with the computed phase angle.
17. The method of any one or more preceding clause(s), wherein processing the error between the reference current and the measured current includes applying a resonant proportional-integral controller to minimize steady-state error and improve dynamic response.
18. The method of any one or more preceding clause(s), wherein each cluster board includes integrated monitoring and switching elements that enable real-time current measurement and voltage regulation at the cluster level.
19. A non-transitory machine-readable storage medium, comprising executable instructions that, when executed by a processor onboard a vehicle, facilitate performance of operations, comprising: receiving speed, torque, and DC voltage inputs; determining required direct-axis and quadrature-axis currents; calculating a current amplitude and angle based on the currents, and transmitting the calculated values along with corresponding rotor or grid angle and rotor or grid velocity data to a plurality of cluster boards; receiving, at a cluster board, the transmitted current amplitude, corresponding rotor or grid angle and rotor or grid velocity data; estimating an updated angle based on information received from the master board, the information comprising a rotor or grid angle, a rotor or grid velocity, and a phase difference associated with a phase sequence of the cluster board; generating a reference current; and comparing the reference current with a measured current at the cluster board and processing the error to generate a reference voltage output for pulse width modulation switching.
20. The non-transitory machine-readable storage medium of any one or more preceding clause(s), wherein the operations further comprise: predefining the required direct-axis and quadrature-axis currents based on AC charging power requirements; and transmitting a grid angle to the plurality of cluster boards.
21. Any suitable combination of any one or more of system clauses 1-10.
22. Any suitable combination of any one or more method clauses 11-18.
23. Any suitable combination of any one or more non-transitory machine-readable storage medium clauses 19-20.
24. Any suitable combination of any features of any one or more of clauses 1-20.

## Claims

1. A system (100) onboard a vehicle (102), comprising:
a plurality of battery cell clusters (124), each cluster comprising one or more battery cells (134) and an associated cluster board (136), wherein each cluster board includes integrated monitoring and switching elements;
a master board (122), configured to communicate with the plurality of cluster boards and provide control signals based on real-time power demands, that sends synchronization values to each cluster board;
a memory (114) that stores computer executable components; and
a processor (110) that executes the computer executable components stored in memory, wherein the computer executable components comprise:
a direct current control component that transmits current amplitude requests, angle information, or priority orders from the master board to the cluster boards, and synchronizes the operation of the plurality of cluster boards by calculating a system reference angle based on the rotor angle, phase difference, and integrated rotor velocity to align the output of the battery cell clusters and produce a controlled AC voltage.

2. The system of claim 1, wherein the direct current control component enables the plurality of battery cell clusters to collectively generate a controlled AC voltage directly from the cells without requiring a conventional inverter.

3. The system of claim 1, wherein the direct current control component synchronizes the output from the plurality of cluster boards to provide AC power suitable for propulsion or charging.

4. The system of claim 1, wherein each cluster board operates independently of one another.

5. The system of claim 1, wherein each of the cluster boards are independently connected to the master board.

6. The system of claim 1, wherein the direct current control component enables the cluster boards to independently regulate power output based on received instructions.

7. The system of claim 1, wherein the direct current control component adjusts power delivery dynamically to meet real-time power demands of the vehicle.

8. The system of claim 1, wherein the status component determines that the vehicle is in driving mode, and the direct current control component transmits motor torque and speed demands of the vehicle from the master board to the cluster boards, while synchronizing the output of multiple cluster boards based on the motor torque and speed demands of the vehicle to generate AC voltage for vehicle propulsion.

9. The system of claim 1, wherein the status component determines the vehicle is charging, and direct current control component synchronizes power delivery with an external grid by adjusting output current and phase of multiple cluster boards to match grid voltage characteristics.

10. A method for controlling power delivery in a battery system onboard a vehicle, the method comprising:
receiving (302) speed, torque, and DC voltage inputs;
determining (304) required direct-axis and quadrature-axis currents;
calculating (306) a current amplitude and angle based on the currents, and transmitting the calculated values along with corresponding rotor or grid angle and rotor or grid velocity data to a plurality of cluster boards;
receiving (308), at a cluster board, the transmitted current amplitude, corresponding rotor or grid angle and rotor or grid velocity data;
estimating (310) an updated angle based on information received from the master board, the information comprising a rotor or grid angle, a rotor or grid velocity, and a phase difference associated with a phase sequence of the cluster board;
generating (312) a reference current; and
comparing (314) the reference current with a measured current at the cluster board and processing the error to generate a reference voltage output for pulse width modulation switching.

11. The method of claim 10, further comprising:
predefining (404) the required direct-axis and quadrature-axis currents based on AC charging power requirements; and
transmitting (406) a grid angle to the plurality of cluster boards.

12. The method of claim 10, wherein determining the required direct-axis and quadrature-axis currents comprises using a maximum torque per ampere control algorithm to optimize torque efficiency during driving.

13. The method of claim 10, wherein the calculated values and corresponding rotor velocity data are transmitted to the plurality of cluster boards at a frequency of approximately 1 kHz, or at another suitable transmission frequency based on system requirements.

14. The method of claim 10, wherein the integrated rotor velocity is used to obtain an angle update, and the updated angle is computed by adding the angle update to the rotor angle and the phase difference angle based on the respective phase sequence of the cluster board.

15. The method of claim 10, wherein processing the error between the reference current and the measured current includes applying a resonant proportional-integral controller to minimize steady-state error and improve dynamic response.
